(19) Europäisches Patentamt
European Patent Office
Office européen des brevets

(11) **EP 2 945 360 B1**

(12) **EUROPÄISCHE PATENTSCHRIFT**

(45) Veröffentlichungstag und Bekanntmachung des Hinweises auf die Patenterteilung:
**04.03.2020   Patentblatt 2020/10**

(51) Int Cl.:
*H04M 11/06* (2006.01)        *H04N 7/10* (2006.01)
*H04Q 1/02* (2006.01)

(21) Anmeldenummer: **15162225.5**

(22) Anmeldetag: **01.04.2015**

(54) **VERFAHREN ZUR KOAXIALEN ÜBERTRAGUNG DIGITALER XDSL-SIGNALE**

METHOD FOR COAXIAL TRANSMISSION OF DIGITAL XDSL SIGNALS

PROCÉDÉ DE TRANSFERT COAXIAL DE SIGNAUX XDSL NUMÉRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2014   DE 102014206448**

(43) Veröffentlichungstag der Anmeldung:
**18.11.2015   Patentblatt 2015/47**

(73) Patentinhaber:
• **Deutsche Telekom AG**
  **53113 Bonn (DE)**
• **Astro Strobel Kommunikationssysteme GmbH**
  **51427 Bergisch-Gladbach (DE)**

(72) Erfinder:
• **Leppla, Ralph**
  **64404 Bickenbach (DE)**
• **Muggenthaler, Peter**
  **64397 Modautal (DE)**
• **Ries, Mirko**
  **64405 Fischbachtal (DE)**
• **Zopf, Bernd**
  **65428 Rüsselsheim (DE)**
• **Leitinger, Franz-Josef**
  **51143 Köln (DE)**

(74) Vertreter: **Schwöbel, Thilo K. et al**
**Kutzenberger Wolff & Partner**
**Waidmarkt 11**
**50676 Köln (DE)**

(56) Entgegenhaltungen:
EP-A2- 1 675 288      WO-A1-01/43324
WO-A1-02/33968      WO-A1-2014/037351
US-A- 5 633 614

## Beschreibung

## Stand der Technik

Die vorliegende Erfindung betrifft ein Verfahren zur Übertragung digitaler XDSL-Signale über ein vorhandenes, bereits einer Übertragung von TV- und/oder Radio-Signalen dienendem Koaxialkabel an eine integrierende Endnutzer-Schnittstelle, so dass für den Endnutzer ein störungsfreier Parallelbetrieb von TV-, Radio- und XDSL-Signalen bei Bezug der Signale über dieselbe Endnutzer-Schnittstelle ermöglicht wird.

Aus dem Stand der Technik sind bereits einige Methoden zur Herstellung eines Digital Subscriber Line Access Multiplexer (DSLAM) zum gleichzeitigen Anbieten verschiedener Medien wie TV, Radio und Internet an einem single-point-of-use für den Endnutzer bekannt. Der Stand der Technik kennt insbesondere für eine Integration von TV- bzw. Satelliten (SAT)-Signalen mit IP-Signalen eine "CoaxLAN"-Technologie, bei welchem ein bereits vorhandenes Antennenkabel, welches dem Empfang von SAT-Signalen dient, für eine zur Verfügungstellung von IP-Signalen ohne Beeinträchtigung eines Fernsehempfangs nutzt. Ein Nachteil dieser "CoaxLAN"-Technologie ist u.a., dass an der "CoaxLAN"-Antennendose ein Kurzwellenempfang nicht mehr möglich ist. Zudem ist eine kontinuierliche Stromversorgung der Antennendose/LAN - auch im Standby Modus - erforderlich.

Der größte Nachteil der im Stand der Technik bekannten "CoaxLAN"-Technologie besteht aber darin, dass über eine, der Antenne nachgeschaltete Einspeiseweiche für eine Wohneinheit insgesamt zur Verfügung gestellte Bitraten mit verschiedenen Endnutzern der Wohneinheit geteilt werden müssen. Bei dem durch die "CoaxLAN"-Technologie zur Verfügung gestellten Übertragungsmedium handelt es sich um ein "Shared Medium", d.h., alle Endnutzer haben Zugriff auf das Übertragungsmedium und teilen sich dieses. Alle Teilnehmer müssen sich die zur Verfügung gestellte Bandbreite teilen. Aufgrund der Shared-Medium-Topologie kommt als weiterer Nachteil hinzu, dass defekte Netzwerkstationen die Funktionsfähigkeit aller anderen Netzwerkstationen beeinträchtigen können. Darüber hinaus haben alle Stationen die Möglichkeit, auch auf Datenpakete zugreifen zu können, die keine Adressierung für sie haben, was die Datensicherheit des zur Verfügung gestellten erheblich reduziert.

WO 01/43324 A1 beschreibt eine VDSL- und RF-Signalkombinations- (und Split-) Vorrichtung zur Übertragung des kombinierten Signals über ein Koaxialkabel.

WO 02/33968 A1 beschreibt die Kombination von VDSL- und TV-Signalen mit einem LPF, einem HPF und einem Balun.

## Offenbarung der Erfindung

Es ist Aufgabe der vorliegenden Erfindung ein Verfahren zur Übertragung digitaler XDSL-Signale über ein vorhandenes, bereits einer Übertragung von TV- und/oder Radio-Signalen dienendem Koaxialkabel an eine integrierende Endnutzer-Schnittstelle zu Verfügung zu stellen, so dass jedem Endnutzer einer Gruppe von mehreren Endnutzern jeweils eine ungeteilte Bitrate eines XDSL-Signals von einer initial an eine vorgeschaltete Verteilerschnittstelle gelieferten Bitrate von XDSL-Signalen zur Verfügung steht, wobei es zu keiner Funktionsbeeinträchtigung bei teilnehmenden Endnutzern bei gleichzeitiger Nutzung der an der Verteilerschnittstelle zur Verfügung gestellten Bitrate kommt und wobei der Grad der Datensicherheit bei einer Nutzung der DSL-Signale gesteigert wird. Dabei umfasst der Begriff "XDSL" bzw. "XDSL-Signale" eine beliebige DSL-Standard (Digital Subscriber Line) Übertragungstechnik, wie z.B. VDSL, welches wiederum VDSL Vectoring oder Super Vectoring (VDSL bis ca. 35 MHz mit Vectoring umfassen kann. Entsprechend kann - im Beispiel der Verwendung von VDSL-Signalen als XDSL-Signale - im Kontext der vorliegenden Patentanmeldung der Begriff "XDSL-Signale" auch durch den Begriff "VDSL-Signale" ersetzt werden.

Die Aufgabe der vorliegenden Erfindung wird gelöst durch ein Verfahren zur Übertragung digitaler DSL-Signale über ein Koaxialkabel an eine Schnittstelle eines Endnutzers, wobei das Koaxialkabel einen Gesamtfrequenzbereich aufweist, welcher dazu ausgebildet ist, TV-Signale und/oder Radiosignale in einem oberen Frequenzbereich des Gesamtfrequenzbereichs an die Schnittstelle des Endnutzers zu übertragen, wobei das Verfahren folgende Schritte umfasst:

- ein Zurverfügungstellen von ersten symmetrischen (balanced) VDSL-Signalen an das Koaxialkabel über eine weitere Schnittstelle;

- ein erstes Transformieren der ersten symmetrischen digitalen VDSL-Signale in unsymmetrische (unbalanced) VDSL-Signale mittels einer ersten Symmetrierglied-Einrichtung (Balun-Einrichtung);

- ein Einkoppeln der unsymmetrischen VDSL-Signale in das Koaxialkabel in einen unteren Frequenzbereich des Gesamtfrequenzbereichs, wobei der untere Frequenzbereich dem oberen Frequenzbereich überschneidungsfrei unterlagert ist,

- ein Dämpfen einer Reflexion der unsymmetrische VDSL-Signale in dem mindestens einen Koaxialkabel mittels eines RLC Filters;

- ein zweites Transformieren der unsymmetrischen VDSL-Signale in zweite symmetrische VDSL-Signale mittels einer zweiten Symmetrierglied- Einrichtung (Balun-Einrichtung);

- ein Auskoppeln der zweiten symmetrischen VDSL-Signale;

- ein separates Zurverfügungstellen der zweiten symmetrischen VDSL-Signale an der Schnittstelle.

Die Aufgabe der vorliegenden Erfindung wird darüberhinaus ebenfalls gelöst durch ein Verfahren zur Übertragung digitaler DSL-Signale über ein Koaxialkabel an eine Schnittstelle eines Endnutzers, wobei das Koaxialkabel einen Gesamtfrequenzbereich aufweist, welcher dazu ausgebildet ist, TV-Signale und/oder Radiosignale in einem oberen Frequenzbereich des Gesamtfrequenzbereichs an die Schnittstelle des Endnutzers zu übertragen, wobei die Schnittstelle einen XDSL-Ausgang umfasst, wobei das Verfahren folgende Schritte umfasst:

- ein Zurverfügungstellen von ersten symmetrischen (balanced) XDSL-Signalen an das Koaxialkabel an einem Digital Subscriber Line Access Multiplexer (DSLAM);

- ein erstes in Richtung des XDSL-Ausgangs gerichtetes Transformieren der ersten symmetrischen digitalen XDSL-Signale in unsymmetrische (unbalanced) XDSL-Signale mittels einer zwischen dem DSLAM und der Schnittstelle (400) lokalisierten Symmetrierglied-Einrichtung (Balun-Einrichtung);

- ein Einkoppeln der unsymmetrischen XDSL-Signale in das Koaxialkabel in einen unteren Frequenzbereich des Gesamtfrequenzbereichs, wobei der untere Frequenzbereich dem oberen Frequenzbereich überschneidungsfrei unterlagert ist,

- ein Dämpfen einer Reflexion der unsymmetrische XDSL-Signale in dem mindestens einen Koaxialkabel mittels eines Filters;

- ein zweites in Richtung des XDSL-Ausgangs gerichtetes Transformieren der unsymmetrischen XDSL-Signale in zweite symmetrische XDSL-Signale mittels einer der Schnittstelle zugeordneten Symmetrierglied- Einrichtung (Balun-Einrichtung);

- ein Auskoppeln der zweiten symmetrischen XDSL-Signale;

- ein separates Zurverfügungstellen der zweiten symmetrischen XDSL-Signale an dem XDSL-Ausgang.

Gegenüber dem Stand der Technik hat das erfindungsgemäße Verfahren dabei den Vorteil, dass jeder Endnutzer, z.B. einer Wohneinheit, unabhängig von dem Nutzerverhalten anderer Endnutzer der Wohneinheit, die maximale Bandbreite, welche von einem XDSL-Provider, an einer Verteilerschnittstelle für die Wohneinheit zur Verfügung gestellt wurde, ungeteilt nutzen kann. Dabei kann die Zurverfügungstellung an die Verteilerschnittstelle z.B. über ein Glasfaserkabel, erfolgen, welches ein Gigabit Ethernet-Signal liefert. Diese Glasfaserverbindung wiederum wird von N Nutzern geteilt. Jeder Endnutzer der Wohneinheit kann beispielsweise die von einem XDSL-Provider an die Verteilerschnittstelle gelieferte Summenbitrate für Upstream und Downstream von beispielsweise 150 Mbit oder 300 Mbit für sich selbst maximal in Anspruch nehmen und muss diese Bandbreite nicht mit den anderen Endnutzern desselben Koaxialkabelsystems teilen. Dabei wird die DSL-Bandbreite direkt an der XDSL-Schnittstelle eingestellt (RAMmax). Der maximale Wert hängt wiederum von den Übertragungsparametern der jeweiligen Leitung ab. Die Auslastung der Strecke zum DSLAM wird planerisch gelöst, z.B. in Form einer Überbuchung gemäß definierter Planungsregeln.

Ein weiterer Vorteil besteht für den XDSL-Provider darin, dass der gleiche DSLAM verwendet werden kann, um über Kupferdoppelader (CuDA) und wahlweise Koaxialkabel (Coax) zu übertragen.

Dadurch, dass der obere Frequenzbereich für die TV- und Radio-Signale und der untere Frequenzbereich für die XDSL-Signale überschneidungsfrei sind, ist für den Endnutzer ein ungestörter Parallelbetrieb von TV, Radio und Internet möglich. Im Gegensatz zu XDSL oder anderen IP-basierten Netzen, beansprucht beispielsweise ein hohes Datenaufkommen im Internet wie z.B. ein Video on Demand keine Bandbreiten des TV-Netzes. Die Videosignale können einfach ungestört durch die XDSL Schnittstelle ins Netz eingespeist werden. Dadurch wird gleichzeitig in vorteilhafter Weise eine reibungslose und störfreie Integration von TV- und XDSL-Signalen in einer Plattform realisierbar. Zudem kann Rückwärtskompatibilität zu bestehender Infrastruktur gewährleistet werden.

Weiterhin kann dabei in vorteilhafter Weise eine schon vorhandene Hybrid-Infrastruktur aus Glasfaserkabeln und Koaxialkabeln noch effektiver genutzt werden. Da es sich um eine Fibre-to-the-Building Lösung handelt, ist eine eventuell notwendige zusätzliche Aufrüstung höchstens auf die Streckenabschnitte zwischen Anschlusspunkt Linientechnik und Kabelverzweiger und/oder zwischen Kabelverzweiger und Vermittlungsstelle beschränkt. Das zu investierende Kapital hält sich in Grenzen.

Symmetrisch (balanced) bedeutet in diesem Zusammenhang, dass zwei gegen Massepotential gleich große gegenphasige Wechselspannungen vorliegen. Unsymmetrisch (unbalanced) bedeutet, dass nur eine einzige Wechselspannung gegen Massepotential oder einem Pseudo-Massepotential vorliegt.

Vorteilhafte Ausgestaltungen und Weiterbildungen der Erfindung sind den Unteransprüchen, sowie der Beschreibung unter Bezugnahme auf die Zeichnungen entnehmbar.

In einer weiteren Ausführungsform ist es vorgesehen, dass

-- für eine Mehrzahl von Koaxialkabeln das erste Transformieren eine Umwandlung von einer ersten Menge von N symmetrischen (balanced) digitalen VDSL-Signalen mit einer Impedanz in einem ersten Impedanzbereich in eine zweite Menge von N unsymmetrischen (unbalanced) digitalen VDSL-Signalen mit einer Impedanz in einem zweiten Impedanzbereich umfasst, wobei N insbesondere ein Vielfaches von 24 (oder aber alternativ größer als 128) ist, und die mindestens eine erste Symmetrierglied-Einrichtung eine Multi-Symmetrierglied-Einheit ist bzw. dass

-- für eine Mehrzahl von Koaxialkabeln das erste in Richtung des XDSL-Ausgangs gerichtete Transformieren eine Umwandlung von einer ersten Menge von N symmetrischen (balanced) digitalen XDSL-Signalen mit einer Impedanz in einem ersten Impedanzbereich in eine zweite Menge von N unsymmetrischen (unbalanced) digitalen XDSL-Signalen mit einer Impedanz in einem zweiten Impedanzbereich umfasst, wobei N insbesondere ein Vielfaches von 24 ist, und die mindestens eine zwischen dem DSLAM und der Schnittstelle lokalisierte Symmetrierglied-Einrichtung eine Multi-Symmetrierglied-Einheit ist

Durch die an der Verteilerschnittstelle stattfindende N:N Transformation der dort N zur Verfügung gestellten symmetrischen (balanced) digitalen XDSL-Signale in N, über mehrere Koaxialkabel an die Endnutzer zu übertragende, unsymmetrische (unbalanced) digitale XDSL-Signale, wird sichergestellt, dass jeder Endnutzer, z.B. jede Mieteinheit eines Mehrparteienwohnhauses, dieselbe maximale, vom XDSL-Provider an der Verteilerschnittstelle gelieferte Bitrate von XDSL-Signalen an der Endnutzerschnittstelle zur Verfügung gestellt bekommt und auch individuell ungeteilt nutzen kann. Das Nutzerverhalten eines Internetnutzers einer Mieteinheit beeinträchtigt nicht das Nutzerverhalten eines anderen Internetnutzers einer anderen Mieteinheit. Das einem Mehrparteienwohnhaus zur Verfügung gestellte Internetnetz stellt trotz gemeinschaftlicher Nutzung kein "Shared Medium" dar, bei welchem sich alle Teilnehmer die Bandbreite teilen müssten. Dass N in vorteilhafter Weise ein Vielfaches von 24 darstellen sollte, korreliert mit der gegenwärtigen Ausführungsform eines DSLAMs, wonach ein genormtes, mit einer Multi-Symmetrierglied-Einheit ausgestattetes DSLAM-Einzelgehäuse mit einer Breite von 19 Zoll und einer Höhe von 44 mm zur Aufnahme von 24 Teilnehmeranschlussleitungen ausgelegt ist, sodass sich eine Installation von einem Vielfachen von 24 Teilnehmeranschlussleitungen durch Kombination genannter genormter DSLAM-Einzelgehäuse mit integrierter Multi-Symmetrierglied-Einheit baulich und technisch leicht realisieren lässt.

In einer weiteren Ausführungsform ist die Schnittstelle eine erweiterte DVB-C (Digital Video Broadcasting-Cable)-Schnittstelle, wobei die erweiterte DVB-C-Schnittstelle einen TV-Ausgang und/oder einen Radio-Ausgang aufweist, wobei der TV-Ausgang und/oder der Radio-Ausgang dazu ausgebildet sind, die TV- und Radio-Signale im oberen Frequenzbereich zur Verfügung zu stellen, dadurch gekennzeichnet, dass

-- die erweiterte DVB-C-Schnittstelle zusätzlich mindestens einen VDSL-Ausgang aufweist, wobei der VDSL-Ausgang dazu ausgebildet ist, zweite symmetrische (balanced) VDSL-Signale im unteren Frequenzbereich zur Verfügung zu stellen, bzw. dass
-- die erweiterte DVB-C-Schnittstelle zusätzlich mindestens den XDSL-Ausgang aufweist, wobei der XDSL-Ausgang dazu ausgebildet ist, die zweiten symmetrischen (balanced) XDSL-Signale im unteren Frequenzbereich zur Verfügung zu stellen.

Dadurch lässt sich in vorteilhafter Weise ohne großen baulichen und finanziellen Aufwand eine integrierte Schnittstelle zum gleichzeitigen Betrieb von TV, Radio und Internet für den Endnutzer realisieren.

Gemäß einer weiteren Ausführungsform stellt ein Digital Subscriber Line Access Multiplexer (DSLAM) die weitere Schnittstelle zur Verfügung.

Ein Digital Subscriber Line Access Multiplexer (DSLAM) stellt als ein dem Koaxialkabelsystem eines Wohngebäudes vorgeschaltetes Netzelement den verschiedenen Wohneinheiten einen breitbandigen Anschluss an das Netz von Internetprovidern zur Verfügung. In vorteilhafter Weise kann über diese zentrale Schnittstelle festgelegt werden, welche Frequenzen für die XDSL-Übertragung über das Koaxialkabelsystem eines Wohngebäudes zu den einzelnen Endnutzer-Schnittstellen in den verschiedenen Wohneinheiten genutzt werden können.

In einer weiteren Ausführungsform erfolgt das Einkoppeln der unsymmetrischen XDSL-Signale mit einer Impedanz im zweiten Impedanzbereich mittels 75 Ohm TV 2-fach-Koppler, wobei insbesondere das mindestens eine Koaxialkabel Teil einer koaxialen TV Sternstruktur, insbesondere eines Gebäudes, ist.

Alternativ erfolgt in einer weiteren Ausführungsform das Einkoppeln der unsymmetrischen XDSL-Signale in das Koaxialkabel mit einer Impedanz im zweiten Impedanzbereich mittels 75 Ohm TV 2-fach-Koppler, wobei insbesondere das Koaxialkabel Teil einer koaxialen TV Sternstruktur, insbesondere eines Gebäudes, ist.

Durch Einsatz marktüblicher Mittel, wie die 75 Ohm TV 2-fach-Koppler, und Verwendung einer schon in vielen Mehrparteienhäusern vorhandenen koaxialen TV Sternstruktur kann der finanzielle und bautechnische Aufwand für eine notwendige Anpassung der Infrastruktur minimiert werden.

Gemäß einer weiteren Ausführungsform ist es vorgesehen, dass der untere Frequenzbereich XDSL-Signale bis annähernd 30 MHz umfasst und/oder der obere Frequenzbereich die TV- und/oder Radio-Signale oberhalb von annähernd 88 MHz umfasst.

Gemäß einer weiteren Ausführungsform ist es alternativ dazu vorgesehen, dass der untere Frequenzbereich XDSL-Signale bis annähernd 35 MHz umfasst und/oder der obere Frequenzbereich die TV- und/oder Radio-Signale oberhalb von annähernd 88 MHz umfasst.

Dadurch lässt sich auf einfache Weise ein störungsfreier Parallelbetrieb von TV-/Radio und XDSL-Internet beim Endnutzer realisieren. Bisher ungenutzte Frequenzen von bereits im Einsatz installierten TV-/Radio-Koaxialkabeln können noch effektiver genutzt werden. Dabei bezieht sich der oben genannte Grenzwert von 35 MHz insbesondere auf die Supervectoring VDSL Technologie.

In einer weiteren Ausführungsform ist es vorgesehen, dass

-- das zweite Transformieren eine Umwandlung der unsymmetrischen (unbalanced) digitalen XDSL-Signale mit einer Impedanz im zweiten Impedanzbereich in zweite symmetrische (balanced) XDSL-Signale mit einer Impedanz von annähernd 100 Ohm, insbesondere in einem Frequenzbereich von annähernd 138 kHz bis annähernd 30 MHz umfasst, wobei der erste Impedanzbereich in einem Bereich um 100 Ohm oder annähernd 100 Ohm liegt und wobei der zweite Impedanzbereich in einem Bereich um 75 Ohm oder annähernd 75 Ohm, insbesondere von 50 Ohm bis 85 Ohm, liegt, bzw. dass

-- das zweite in Richtung des XDSL-Ausgangs gerichtete Transformieren eine Umwandlung der unsymmetrischen (unbalanced) digitalen XDSL-Signale mit einer Impedanz im zweiten Impedanzbereich in zweite symmetrische (balanced) XDSL-Signale mit einer Impedanz von annähernd 100 Ohm, insbesondere in einem Frequenzbereich von annähernd 138 kHz bis annähernd 30 MHz (oder auch gemäß einer alternativen Ausführungsform: bis annähernd 35 MHz) umfasst, wobei der erste Impedanzbereich in einem Bereich um 100 Ohm oder annähernd 100 Ohm liegt und wobei der zweite Impedanzbereich in einem Bereich um 75 Ohm oder annähernd 75 Ohm, insbesondere von 50 Ohm bis 85 Ohm, liegt.

Durch die Rücktransformation der transformierten XDSL-Signale in unmittelbarer Nähe der Endnutzer-Schnittstelle wird in vorteilhafter Weise erreicht, dass dem Endnutzer an der Endnutzerschnittstelle wieder die symmetrischen (balanced) XDSL-Signale mit einer Impedanz von annähernd 100 Ohm zur Verfügung stehen, wie sie initial vom XDSL-Provider geliefert wurden. XDSL-Endgeräte können die symmetrischen (balanced) XDSL-Signale wieder interpretieren.

In einer weiteren Ausführungsform ist es vorgesehen, dass

-- die zweite Symmetrierglied-Einrichtung einen Transformator umfasst, wobei der Transformator dazu ausgebildet, Impedanzen in einem Bereich von annähernd 50 bis annähernd 85 Ω in eine Impedanz von annähernd 100 Ohm zu transformieren bzw. dass

-- die der Schnittstelle zugeordnete Symmetrierglied-Einrichtung einen Transformator umfasst, wobei der Transformator dazu ausgebildet, Impedanzen in einem Bereich von annähernd 50 bis annähernd 85 Ω in eine Impedanz von annähernd 100 Ohm zu transformieren.

Dadurch wird in vorteilhafter Weise erreicht, dass die Rücktransformation nahezu verlustfrei erfolgt und gleichzeitig die an der Endnutzer-Schnittstelle zur Verfügung stehenden XDSL-Signale einer der Standardnorm entsprechende Impedanz aufweisen.

In einer weiteren Ausführungsform ist es vorgesehen, dass

-- die zweite Symmetrierglied-Einrichtung ferner eine Gleichtaktdrossel (Common Mode Choke) umfasst, wobei die Gleichtaktdrossel mit dem Transformator mit einer Induktivität von annähernd 70 μH in Reihe geschaltet ist bzw. dass

-- die der Schnittstelle zugeordnete Symmetrierglied-Einrichtung ferner eine Gleichtaktdrossel (Common Mode Choke) umfasst, wobei die Gleichtaktdrossel mit dem Transformator mit einer Induktivität von annähernd 70 μH in Reihe geschaltet ist.

Dadurch wird in vorteilhafter Weise eine Verbesserung der Symmetriedämpfung erzielt.

In einer weiteren Ausführungsform ist es vorgesehen, dass der XDSL- Ausgang ein symmetrischer 100 Ohm Ausgang ist und dazu ausgebildet ist, die zweiten symmetrischen XDSL-Signale mit einer Impedanz im ersten Impedanzbereich im unteren Frequenzbereich bis annähernd 30 MHz zur Verfügung zu stellen.

In einer weiteren Ausführungsform ist es alternativ dazu vorgesehen, dass der XDSL-Ausgang ein symmetrischer 100 Ohm Ausgang ist und dazu ausgebildet ist, die zweiten symmetrischen XDSL-Signale mit einer Impedanz im ersten Impedanzbereich im unteren Frequenzbereich bis annähernd 35 MHz (oder gemäß einer alternativen Ausführungsform auch bis annähernd 30 MHz) zur Verfügung zu stellen.

Dadurch wird in vorteilhafter Weise ein den Standardnormen entsprechender XDSL-Ausgang an einer Endnutzer-Schnittstelle zur Verfügung gestellt, welcher kompatibel zu handelsüblichen XDSL-Endgeräten ist.

In einer weiteren Ausführungsform ist es vorgesehen, dass der XDSL- Ausgang ferner eine Anschlussdämpfung von annähernd 4 dB und/oder eine Reflexionsdämpfung größer oder gleich 30 dB aufweist.

In einer weiteren Ausführungsform ist es alternativ dazu vorgesehen, dass der XDSL-Ausgang eine Anschlussdämpfung von annähernd 1 dB und/oder eine Reflexionsdämpfung größer oder gleich 30 dB aufweist.

Dadurch wird in vorteilhafter Weise einer Störung einer XDSL Empfangseinheit durch Reflexionen einer XDSL-Sendeeinheit sowie einer Verringerung des Signal-Rausch-Abstands effektiv entgegen gewirkt. XDSL nutzt ein bidirektionales Übertragungsverfahren. Daher sind die Anforderungen an die Dämpfung von Reflexionen im XDSL Frequenzbereich wesentlich höher als im darüber liegenden TV/Radio (DVB-C) Frequenzbereich. Durch Integration eines Hochpassfilters an dem XDSL- Ausgang einer Endnutzer-Schnittstelle ist in vorteilhafter Weise eine technische Realisierung einer Frequenzweiche möglich, sodass eine Anschlussdämpfung von annähernd 1 dB erreicht werden kann.

In einer weiteren Ausführungsform ist es vorgesehen, dass der TV-Ausgang und/oder der Radio-Ausgang eine Anschlussdämpfung von annähernd 12 dB und/oder eine Reflexionsdämpfung größer oder gleich 20 dB aufweist.

In einer weiteren Ausführungsform ist es alternativ dazu vorgesehen, dass der TV-Ausgang und/oder der Radio-Ausgang eine Anschlussdämpfung von annähernd 12 dB bis 14 dB und/oder eine Reflexionsdämpfung größer oder gleich 20 dB aufweist.

Dadurch erfolgt in vorteilhafter Weise eine Abstimmung auf die Einzelkomponenten der integrierten Endnutzer-Schnittstelle. TV/Radio- (DVB-C) Signale werden unidirektional übertragen und deshalb gegenüber Reflexionen weniger empfindlich, sodass die Reflexionsdämpfung hier niedriger gewählt werden kann als für die XDSL-Signale.

Ein weiterer Gegenstand der vorliegenden Erfindung ist ein System zur Übertragung digitaler VDSL-Signale über ein Koaxialkabel an eine Schnittstelle eines Endnutzers, wobei das Koaxialkabel einen Gesamtfrequenzbereich aufweist, welcher dazu ausgebildet ist, TV-Signale und/oder Radiosignale in einem oberen Frequenzbereich des Gesamtfrequenzbereichs an die Schnittstelle des Endnutzers zu übertragen, wobei das System umfasst:

- eine weitere Schnittstelle für ein Zurverfügungstellen von ersten symmetrischen (balanced) VDSL-Signalen an das Koaxialkabel;

- mindestens eine erste Symmetrierglied-Einrichtung (Balun-Einrichtung) für ein erstes Transformieren der ersten symmetrischen digitalen VDSL-Signale in unsymmetrische (unbalanced) VDSL-Signale;

- Mittel für ein Einkoppeln der unsymmetrische VDSL-Signale in das Koaxialkabel in einen unteren Frequenzbereich des Gesamtfrequenzbereichs, wobei der untere Frequenzbereich dem oberen Frequenzbereich überschneidungsfrei unterlagert ist,

- einen RLC Filter für ein Dämpfen einer Reflexion der unsymmetrische VDSL-Signale in dem Koaxialkabel;

- eine zweite Symmetrierglied-Einrichtung (Balun-Einrichtung) für ein zweites Transformieren der unsymmetrischen VDSL-Signale in zweite symmetrische (balanced) DSL-Signale;

- Mittel für ein Auskoppeln der zweiten symmetrischen VDSL-Signale;

- eine Schnittstelle für ein separates Zurverfügungstellen der zweiten symmetrischen VDSL-Signale.

Ferner ist ein weiterer Gegenstand der vorliegenden Erfindung ein System zur Übertragung digitaler XDSL-Signale über ein Koaxialkabel an eine Schnittstelle eines Endnutzers, wobei das Koaxialkabel einen Gesamtfrequenzbereich aufweist, welcher dazu ausgebildet ist, TV-Signale und/oder Radiosignale in einem oberen Frequenzbereich des Gesamtfrequenzbereichs an die Schnittstelle des Endnutzers zu übertragen, wobei die Schnittstelle einen XDSL-Ausgang umfasst, wobei das System umfasst:

- einen Digital Subscriber Line Access Multiplexer (DSLAM) für ein Zurverfügungstellen von ersten symmetrischen (balanced) XDSL-Signalen an das Koaxialkabel;

- mindestens eine zwischen dem DSLAM und der Schnittstelle (400) lokalisierte Symmetrierglied-Einrichtung (Balun-Einrichtung) für ein erstes in Richtung des VDSL-Ausgangs gerichtetes Transformieren der ersten symmetrischen digitalen XDSL-Signale in unsymmetrische (unbalanced) XDSL-Signale;

- Mittel für ein Einkoppeln der unsymmetrische XDSL-Signale in das Koaxialkabel in einen unteren Frequenzbereich des Gesamtfrequenzbereichs, wobei der untere Frequenzbereich dem oberen Frequenzbereich überschneidungsfrei unterlagert ist,

- einen Filter - insbesondere einen RLC oder einen LC Filter - für ein Dämpfen einer Reflexion der unsymmetrische XDSL-Signale in dem Koaxialkabel;

- eine der Schnittstelle zugeordnete Symmetrierglied-Einrichtung (Balun-Einrichtung) für ein zweites in Richtung des XDSL-Ausgangs gerichtetes Transformieren der unsymmetrischen XDSL-Signale in zweite symmetrische (balanced) DSL-Signale;

- Mittel für ein Auskoppeln der zweiten symmetrischen XDSL-Signale;

- den VDSL-Ausgang für ein separates Zurverfügungstellen der zweiten symmetrischen XDSL-Signale.

Ein weiterer Gegenstand der vorliegende Erfindung ist eine Schnittstelle zur Übertragung digitaler VDSL-Signale über ein Koaxialkabel nach oben beschriebenen Verfahren, wobei die Schnittstelle eine erweiterte DVB-C Schnittstelle ist, welche neben einem TV-Ausgang und/oder einen Radio-Ausgang, welche dazu ausgebildet sind, TV- und Radio-Signale in einem oberen Frequenzbereich zur Verfügung zu stellen, einen zusätzlichen VDSL- Ausgang aufweist, wobei der zusätzliche VDSL Ausgang ein symmetrischer Ausgang ist und dazu ausgebildet ist, symmetrische (balanced) VDSL-Signale in einem unteren Frequenzbereich zur Verfügung zu stellen.

Ferner ist ein weiterer Gegenstand der vorliegende Erfindung eine Schnittstelle zur Übertragung digitaler XDSL-Signale über ein Koaxialkabel nach oben beschriebenen Verfahren, wobei die Schnittstelle eine erweiterte DVB-C Schnittstelle ist, welche neben einem TV-Ausgang und/oder einen Radio-Ausgang, welche dazu ausgebildet sind, TV- und Radio-Signale in einem oberen Frequenzbereich zur Verfügung zu stellen, einen XDSL-Ausgang aufweist, wobei der XDSL Ausgang ein symmetrischer Ausgang ist und dazu ausgebildet ist, symmetrische (balanced) XDSL-Signale in einem unteren Frequenzbereich zur Verfügung zu stellen.

In einer weiteren Ausführungsform ist der zusätzliche XDSL-Ausgang ein koaxialer Ausgang, wobei der koaxiale Ausgang ferner eine Anschlussdämpfung von annähernd 4 dB und/oder eine Reflexionsdämpfung größer oder gleich 30 dB aufweist.

In einer weiteren Ausführungsform ist es alternativ dazu vorgesehen, dass der XDSL-Ausgang statt des symmetrischen Ausgangs ein koaxialer Ausgang ist, wobei der koaxiale Ausgang ferner eine Anschlussdämpfung von annähernd 1 dB und/oder eine Reflexionsdämpfung größer oder gleich 30 dB aufweist.

In einer weiteren Ausführungsform weist die Schnittstelle ferner einen Kabeladapter oder ein Adapterkabel auf, wobei das Adapterkabel eine Symmetrierglied-Einrichtung und einen symmetrischen Kabelabschnitt aufweist.

In einer weiteren Ausführungsform weist die Schnittstelle alternativ ferner einen Kabeladapter oder ein Adapterkabel auf, wobei das Adapterkabel eine der Schnittstelle zugeordnete Symmetrierglied-Einrichtung und einen symmetrischen Kabelabschnitt aufweist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

## Kurze Beschreibung der Figuren

**Figur 1** zeigt ein Flussdiagramm mit Verfahrensschritten;

**Figur 2** zeigt ein Schaltbild mit einem RLC-Tiefpassfilter, einer Symmetrierglied-Einrichtung und einem XDSL-Ausgang.

**Figur 3** zeigt mehrere Übertragungsfunktionen der Symmetrierglied-Einrichtung und des RLC Tiefpassfilters in Abhängigkeit von verschiedenen Filterparametern.

**Figur 4** zeigt eine schematische Darstellung einer Integration einer TV-/Radio (DVB-C) - Schnittstelle und eines XDSL-Ausgangs.

**Figur 5** zeigt in schematischer Darstellung die Ausgänge einer modifizierten DVB-C Endnutzer-Schnittstelle mit zusätzlichem XDSL-Ausgang.

**Figur 6** zeigt eine alternative Ausführungsform der modifizierten DVB-C Endnutzer-Schnittstelle mit einer Frequenzweiche.

**Figur 7** zeigt eine Ausführungsform des Digital Subscriber Line Access Multiplexer (DSLAM) mit Frequenzweiche.

**Figur 8** zeigt die Dämpfung eines Hoch- und eines Tiefpassfilters in Abhängigkeit von der Frequenz.

## Ausführungsformen der Erfindung

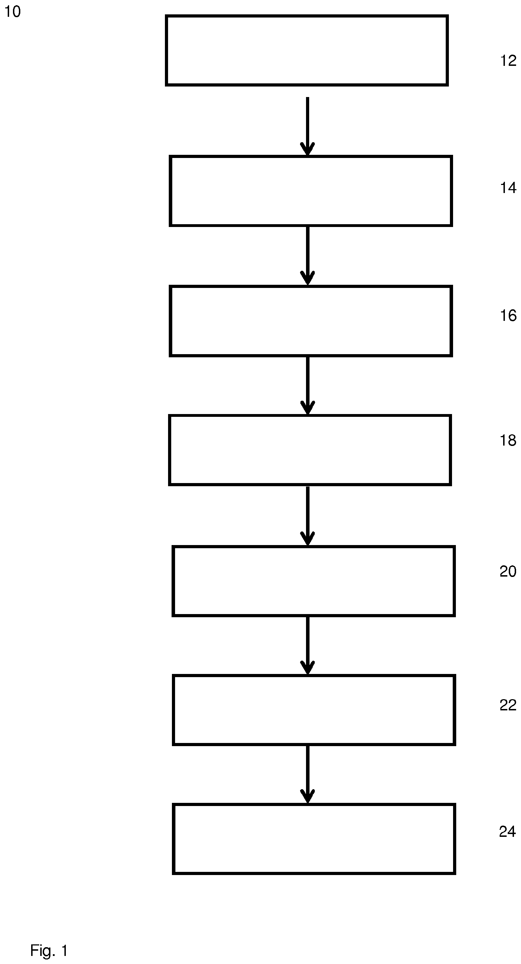

**Figur 1** zeigt ein Flussdiagramm 10 mit den erfindungsgemäßen Verfahrensschritten.

In Schritt 12 erfolgt ein Zurverfügungstellen von ersten symmetrischen (balanced) XDSL-Signalen über Glasfaserkabel 704 an mindestens ein Koaxialkabel 302 an einem Digital Subscriber Line Access Multiplexer (DSLAM) 700. In Schritt 14 werden in einer ersten Transformation der ersten symmetrischen digitalen XDSL-Signale in unsymmetrische (unbalanced) XDSL-Signale mittels mindestens einer ersten Symmetrierglied-Einrichtung (Balun-Einrichtung) umgewandelt. In Schritt 16 werden die N unsymmetrischen XDSL-Signale in das mindestens eine Koaxialkabel in einen unteren Frequenzbereich des Gesamtfrequenzbereichs eingekoppelt, wobei der untere Frequenzbereich dem oberen Frequenzbereich überschneidungsfrei unterlagert ist. In Schritt 18 erfolgt eine Dämpfung einer Reflexion der unsymmetrische XDSL-Signale in dem mindestens einen Koaxialkabel mittels eines Filter, beispielsweise eines RLC-Filters. In Schritt 20 erfolgt eine zweite Transformation der unsymmetrischen XDSL-Signale in zweite symmetrische XDSL-Signale mittels einer zweiten Symmetrierglied-Einrichtung (Balun-Einrichtung). In Schritt 22 erfolgt ein Auskoppeln der zweiten symmetrischen XDSL-Signale aus dem auf dem Koaxialkabel zur Verfügung gestellten Gesamt-Frequenzbereich. In Schritt 24 werden die zweiten symmetrischen XDSL-Signale an der Schnittstelle separat zur Verfügung gestellt.

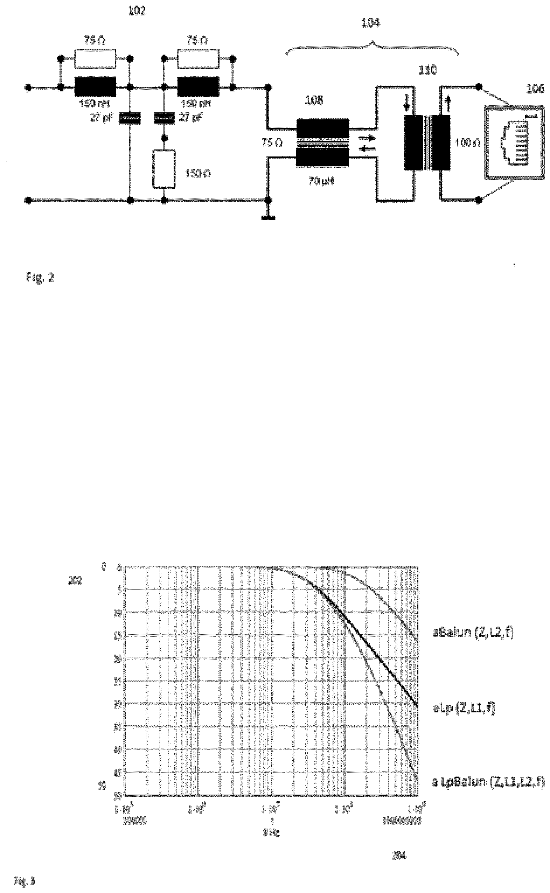

**Figur 2** zeigt ein Schaltbild mit einem RLC-Tiefpassfilter 102, einer zweiten Symmetrierglied-Einrichtung 104 und einem XDSL-Ausgang 106. Gedanklich zu projizieren ist diese Schaltanordnung auf den letzten Abschnitt des zur Endnutzer-Schnittstelle hinführenden Koaxialkabels kurz vor dem erfindungsgemäßen XDSL-Ausgang 106. Von links nach rechts gesehen, werden in dem Koaxialkabel bereits in unsymmetrische transformierte XDSL-Signale über den RLC-Tiefpassfilter 102 übertragen, welcher die Aufgabe hat, eine nach EN 55022 maximal zulässige Abstrahlung des Gesamtsystems zu reduzieren. Der RLC-Tiefpassfilter 102 besitzt bei sorgfältiger Ausführung im gesamten Frequenzbereich einschließlich des Sperrbereichs eine sehr hohe Reflexionsdämpfung. Dabei wird die gesamte Energie des Sperrbereichs nicht wie bei LC Filtern reflektiert, sondern in den Widerständen komplett verbraucht. Das Prinzip des RLC-Tiefpassfilters 102 beruht darauf, dass L und C über die folgende Funktion miteinander in Beziehung stehen:

$$C\,(Z,L) := \frac{L}{Z^2}$$

mit L: Induktivität,
C: Kapazität,
Z: Wechselstromwiderstand.

Für die Übertragungsfunktion ergibt sich dann folgende Funktion:

$$aLp\,(Z,L,f) := -\,20\,\log\left(\left|\frac{Z}{4i\pi fL+Z}\right|\right)$$

mit: f: Frequenz,
aLp: durch Tiefpass bewirkte Schwächung (mit a für attenuation und Lp für low pass);
L: Wicklungsilnduktivität;
AL: typische Induktivität einer einzigen Wicklung eines Kerns.

C ist in dieser Funktion implizit über C = L / $Z^2$ enthalten.

Bei der hier offenbarten Lösung mit Richtkoppler-Ausgang, wie sie in Figur 2 dargestellt ist, ist die Verwendung eines RLC Tiefpassfilters technisch vorteilhaft. RLC Filter können nämlich bei korrekter Dimensionierung im gesamten Frequenzbereich eine vollständige Anpassung aufweisen, da die Energie der Sperrfrequenzen durch die Widerstände R verbraucht werden kann. Hingegen hätte eine Verwendung eines LC Filters im Sperrbereich eine Totalreflexion über den Richtkoppler zurück mit etwa 8 dB (2x4 dB, hin- und zurück) Reflexionsdämpfung zur Folge.

Die in Serie nachgeschaltete Symmetrier-Einrichtung (Balun) 104 hat die Aufgabe, das unsymmetrische, koaxiale annähernd 75 Ω XDSL-Signal wieder in ein symmetrisches annähernd 100 Ω XDSL-Signal vorzugsweise im Frequenzbereich von ca. 138 kHz bis 30 MHz nahezu verlustfrei umzuwandeln. Die bevorzugte Ausführungsform der Symmetrier-Einrichtung (Balun) 104 besteht im Wesentlichen aus einer Gleichtaktdrossel (Common Mode Choke) 108 und einem Transformator 110.

Die Gleichtaktdrossel (Common Mode Choke) 108 ist zur Verbesserung einer Symmetriedämpfung dem Transformator 110 mit einer Induktivität von annähernd 70 μH in Reihe geschaltet. In einer Ausführungsform weist die Gleichtaktdrossel (Common Mode Choke) 108 Ringkerne 6,3 × 2,5 × 1,3 mm mit einem aL Wert von annähernd 1,0 μH bei einer Windung auf. Zur Realisierung einer Wellenimpedanz von annähernd 70 Ω kann bei angepasster Wahl der Abmessungen die Gleichtaktdrossel 108 vorzugsweise mit 8 Windungen unter Verwendung von lackisoliertem Doppeldraht ausgestattet werden.

Der Transformator 110 hat die Aufgabe, eine Impedanz der unsymmetrischen XDSL-Signale von annähernd 75 Ω in annähernd 100 Ω umzuwandeln. In einer Ausführungsform weist der Transformator 110 ein Wicklungsverhältnis von 13 : 15 bzw. ein Induktivitätsverhältnis von 338 μH : 450 μH auf. In einer weiteren Ausführungsform ist der Transformator 110 mit Ringkernen mit den Maßen 9,5 × 4,75 x3,3 mm und mit einem aL Wert von annähernd 2,0 μH bei einer Windung ausgestattet.

Dabei ist zu berücksichtigen, dass die tatsächliche Impedanz der unsymmetrischen XDSL-Signale an diversen Koax-Kopplern oder Koax-Multimediadosen in einem Intervall von annähernd 50 bis 85 Ω liegen kann. Aus diesem Grund ist der zu realisierende Transformator an die konkreten Impedanz-Verhältnisse der verwendeten koaxialen Einheiten mithilfe entsprechender Wicklungsverhältnisse abzustimmen.

Bei Transformatoren ist eine Streuinduktivität unvermeidbar. Daher ist in einer Ausführungsform des Transformators 110 zur Kompensierung der auftretenden Streuinduktivität eine vollständige Umschließung dessen Ringkerne einschließlich der Wicklung mit Kupferfolie und eine Fixierung mit Schrumpfschlauch vorgesehen. Dadurch kann an der erweiterten Endnutzer-Schnittstelle mit integriertem XDSL-Ausgang 106 eine Reflexionsdämpfung von annähernd 30 dB für den XDSL-Ausgang 106 erreicht werden.

In einer Ausführungsform ist der XDSL-Ausgang 106 als standardisierte RJ45 Cat6 XDSL Schnittstelle vorgesehen.

**Figur 3** zeigt mehrere resultierende Übertragungsfunktionen der Kombination aus dem Symmetrierglied-Einrichtung 104 und des RLC Tiefpassfilters 102 für verschiedene Filterparameter, wie z.B. Induktivität L, Wechselstromwiderstand Z und Frequenz f. Dargestellt ist das jeweilige Ausmaß der durch RLC-Tiefpassfilter 102 und Balun 108 bewirkten Filterdämpfung in Abhängigkeit von den Frequenzen f der gefilterten unsymmetrischen XDSL-Signale.

In **Figur 3** steht aBalun(Z,L2,f) für die Übertragungsfunktion des Baluns mit Dämpfungszunahme oberhalb von ca. 150 MHz. Dieser Dämpfungsverlauf ist nicht ausreichend, um die EN 55022 einzuhalten. aLp(Z,L1,f) steht für die Übertragungsfunktion des Tiefpasses mit Dämpfungszunahme oberhalb von ca. 30 MHz. bzw. 35 MHz aLPBalun(Z,L1.L2,f) steht für die durch Balun und Tiefpass erzielte Summendämpfung.

Gemäß dem Stand der Technik besteht ein Problem darin, dass bei fehlender Filterdämpfung die über das Koaxialkabel geführten Hochfrequenzsignale nahezu ungefiltert über die integrierte Symmetrierglied-Einrichtung 104 und die folgende symmetrische, nicht geschirmte XDSL Installation, welche bestimmungsgemäß nur Frequenzen bis 30 MHz bzw. 35 MHz nutzt, in jeder Wohnung als Störsignal in unzulässiger Höhe abgestrahlt würden. Ohne Filterdämpfung würden in vielen Fällen die von der Norm EN 55022 vorgeschriebenen Grenzwerte überschritten werden, denn die zahlreichen in großen Wohngebäuden vorhandenen, nicht abgeschirmten Kupfer-Doppelader-Leistungen und elektrischen Geräte verhalten sich bei Hochfrequenzsignalen wie eine räumlich ausgedehnte "Antennenanlage". Da sich Abstrahlung und Einstrahlung in derartigen Systemen nahezu reziprok verhalten, würden in Gegenrichtung in das Wohngebäude eingestrahlte Störsignale über diese "Antennenanlage" empfangen und über das Koaxialkabelsystem eines Wohngebäudes an alle DVB-C Nutzer verteilt. XDSL-Endgeräte sind in der Regel nicht abgeschirmt, sodass sich in Verbindung mit geschirmten Kategorie 6 Kabeln auch keine geschlossene Schirmfläche um das Gesamtsystem bilden lässt.

Ein LC Tiefpassfilter wäre nicht geeignet, das soeben geschilderte Problem zu lösen, da ein LC Tiefpassfilter im Sperrbereich grundsätzlich eine Totalreflexion der DVB-C Signale verursacht, welche sich am Ausgang der erweiterten DVB-C Endbenutzer-Schnittstelle mit integriertem XDSL-Ausgang aufgrund einer 4 dB Anschlussdämpfung mit einer Reflexionsdämpfung von annäherungsweise nur 8 dB auswirkt. Die nicht eliminierten Reflexionen können störend auf eine ordnungsgemäße Verteilung der DVB-C Signale wirken.

Es hat sich herausgestellt, dass zur Lösung der Problematik erfindungsgemäß der Einsatz eines RLC-Tiefpassfilters 102 geeignet ist. Durch den Einsatz eines RLC-Tiefpassfilters 102 kann in vorteilhafter Weise eine hinreichende Dämpfung im Frequenzbereich oberhalb von 30 MHz bzw. 35 MHz bis 862 MHz] erreicht werden, wobei das genannte Frequenzspektrum einem über ein üblicherweise sternförmig aufgebautes Koaxialsystem eines Wohngebäudes geführtem Frequenzbereich entspricht und an den TV- und Radio-Ausgängen von heutigen DVB-C Schnittstellen zur Verfügung steht.

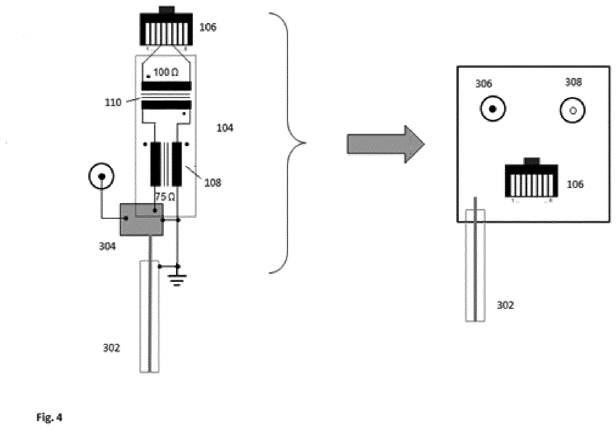

**Figur 4** zeigt eine schematische Darstellung 300 einer Integration einer TV-/Radio (DVB-C) -Schnittstelle und eines XDSL-Ausgangs 106 mit Angabe der jeweiligen Frequenzbereiche.

Über das Koaxialkabel 302 steht an der Endnutzer-Schnittstelle ein Gesamt- Frequenzbereich von annähernd 138 kHz bis annähernd 30 MHz bzw. 35 MHz zur Verfügung. Davon stehen für die TV- und Radio-Signale ein Teil-Frequenzbereich von annähernd 88 bis 862 MHz mit einer Anschlussdämpfung von größer oder gleich 10 dB zur Verfügung. Am TV- und/oder Radio-Ausgang beträgt dabei die Reflexionsdämpfung größer oder gleich 20 dB. Für die XDSL-Signale steht im Koaxialkabel ein Teil-Frequenzbereich von 138 kHz bis 30 MHz bzw. 35 MHz mit einer Anschlussdämpfung von kleiner oder gleich 4 dB zur Verfügung. Am XDSL-Ausgang beträgt dabei die Reflexionsdämpfung größer oder gleich 30 dB.

Die erweiterte DVB-C Endnutzer-Schnittstelle mit integriertem XDSL-Ausgang 106 stellt ein auf die Einzelkomponenten exakt abgestimmtes Gesamtsystem dar. Während die TV- und Radio DVB-C Signale unidirektional übertragen werden und deshalb gegenüber Reflexionen weit weniger empfindlich sind, werden die XDSL-Signale bidirektional übertragen und wirken sich Reflexionen einer XDSL-Sendeeinheit unmittelbar oder direkt störend auf eine Empfangseinheit aus, so dass ein Signal-Rausch-Abstand verringert wird. Die Anforderungen an die Reflexionsdämpfungen sind daher im XDSL Frequenzbereich wesentlich höher als im darüber liegenden TV-/Radio- DVB-C Frequenzbereich. Die oben angegebenen technischen Werte der verschiedenen Ausgänge der erweiterten DVB-C Endnutzer-Schnittstelle tragen diesen unterschiedlichen Anforderungen insbesondere bezüglich der Reflexionsdämpfungen hinreichend Rechnung.

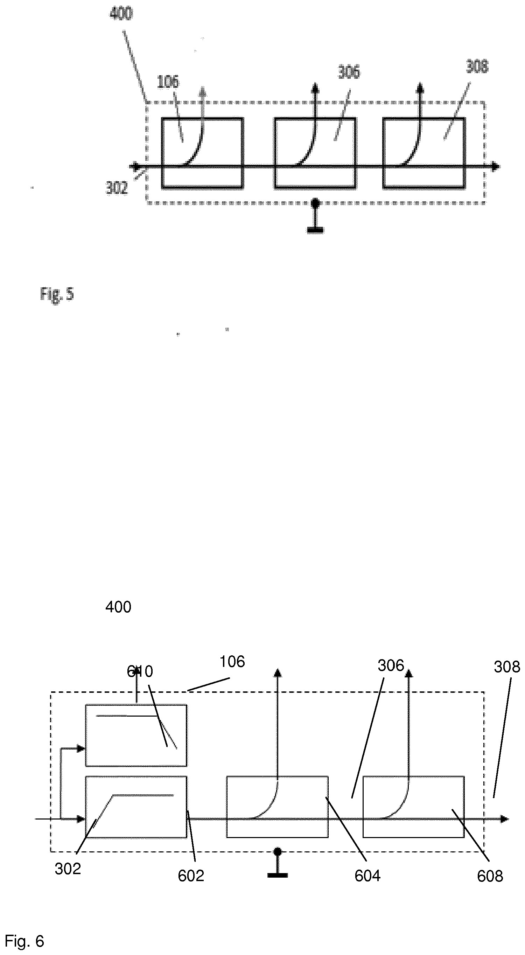

**Figur 5** zeigt in schematischer Darstellung die Ausgänge einer modifizierten DVB-C Endnutzer-Schnittstelle 400, umfassend einen TV-Ausgang 306, einen Radio-Ausgang 308 und einen zusätzlichem Ausgang, welcher durch die Vorschaltung des Tiefpassfilters 102 (insbesondere ein RLC-Tiefpassfilter 102) und der Symmetrierglied-Einrichtung (Balun) 104 vorkonfiguriert wurde und für einen zusätzlichen XDSL-Ausgang 106 zur Verfügung steht. An der modifizierten DVB-C Endnutzer-Schnittstelle 400 wird über ein Koaxialkabel 302 ein Frequenzbereich von annähernd 138 kHz bis annähernd 862 MHz zur Verfügung gestellt.

Die DVB-C Endnutzer-Schnittstelle 400 besteht im Wesentlichen aus einer Kaskadierung von drei Breitband-Richtkopplern nach Sontheimer-Frederik, wobei jeweils eine richtungsabhängige Abzweigung von elektromagnetischen Wellen erfolgt. Durch die Vorschaltung des Tiefpassfilters 102 (insbesondere ein RLC-Tiefpassfilter 102) und der Symmetrierglied-Einrichtung (Balun) 104 vor dem XDSL-Ausgang 106 erfolgt darüber hinaus die Abzweigung noch frequenzabhängig, sodass am erfindungsgemäßen XDSL-Ausgang nur die DSL-Signale in einem Frequenzbereich bis annähernd 30 MHz bzw. 35 MHz abgezweigt werden.

Vorzugsweise ist der XDSL-Ausgang 106 einer erweiterten DVB-C Endnutzer-Schnittstelle 400 ein 100 Ω Ausgang, welchem einerseits zur Minimierung unerwünschter Ab- und Einstrahlungseffekte aus dem oder in einem gemeinschaftlich genutzten Koaxialkabelsystem als auch zur Auskopplung von niederfrequenten XDSL-Signalen ein Tiefpassfilter (insbesondere ein RLC-Tiefpassfilter 102) und eine Symmetrierglied-Einrichtung (Balun) 104 vorgeschaltet ist. In vorteilhafter Weise werden einem Endnutzer an der erweiterten DVB-C Endnutzer-Schnittstelle 400 mit integriertem XDSL-Ausgang ungeteilte XDSL-Bitraten und -Bandbreiten zur Verfügung gestellt, und zwar unbeeinträchtigt und unabhängig von einer Anzahl von weiteren Endnutzern innerhalb desselben Koaxialkabelsystem, die jeweils über weitere erweiterte DVB-C Endnutzer-Schnittstellen 400 mit integriertem XDSL-Ausgang 106 ebenfalls XDSL-Signale auskoppeln und nutzen.

**Figur 6** zeigt eine alternative Ausführungsform der in Figur 5 beschriebenen modifizierten DVB-C Endnutzer-Schnittstelle 400 mit zusätzlich eingebautem Hochpassfilter zur Realisierung einer Frequenzweiche, wobei der Hochpassfilter 602 dem XDSL-Ausgang 106 zugeordnet ist. Zur technischen Realisation einer Frequenzweiche werden Hoch- und Tiefpassfilter in LC Ausführung verwendet, da beide Filter jeweils im Sperrbereich "hochohmig" und im Durchgangsbereich "durchgängig bzw. neutral" sein sollten, also keine nennenswerte "Parallelimpedanz" zur dahinterliegenden Abschluss-Impedanz darstellen sollten. Bei Verwendung von Hoch- und Tiefpassfilter in LC Ausführung laufen tiefe Frequenzen nahezu unbehelligt durch den Tiefpass, während der parallel geschaltete Hochpass in diesem Frequenzbereich hochohmig ist, und hohe Frequenzen nahezu unbehelligt durch den Hochpass laufen, während der Tiefpass in diesem Frequenzbereich hochohmig ist.

Die Frequenzweiche ermöglicht eine höhere Frequenzselektivität und höhere Gütequalität der für den XDSL-Ausgang 106 zur Verfügung gestellten XDSL-Signale. Dadurch ist es in vorteilhafter Weise möglich, am XDSL-Ausgang 106 die Anschlussdämpfung auf annähernd 1 dB zu senken. Gleichzeitig bewirkt die Frequenzweiche durch die mögliche technische Realisierung eines höheren Aufsplitterungsgrads der XDSL-Signale, dass über den integrierten LC-Tiefpassfilter 610 und über die vorgeschaltete Symmetrierglied-Einrichtung (Balun) 104 dem TV-Ausgang 306 über den diesem zugeordneten Richtkoppler 604 und dem Radio-Ausgang 308 über den diesem zugeordneten Richtkoppler 608 Frequenzkanäle mit erhöhter Trennschärfe und erhöhter Gütequalität zur Verfügung gestellt werden. Dadurch ist es möglich, dass der TV-Ausgang 306 und/oder der Radio-Ausgang 308 eine Anschlussdämpfung von annähernd 12 dB bis 14 dB und/oder eine Reflexionsdämpfung größer oder gleich 20 dB aufweisen.

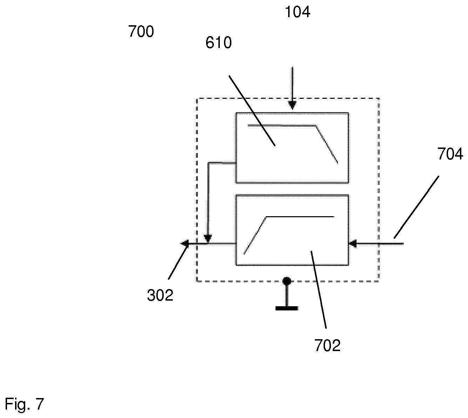

**Figur 7** zeigt eine Ausführungsform des Digital Subscriber Line Access Multiplexer (DSLAM) mit Frequenzweiche, umfassend einen Hochpassfilter 702 und einen Tiefpassfilter 704 jeweils in LC Ausführung mit vorgeschalteter Symmetrierglied-Einrichtung (Balun) 104. Eine Steigerung der Frequenzselektivität der XDSL-Signale und des Aufsplitterungsgrads der Frequenzsignale kann somit schon an der Schnittstelle zwischen dem Glasfaserkabelnetz und dem Koaxialkabelnetz eines Wohngebäudes realisiert werden. Dadurch kann eine Reduzierung eines Outputlevels von im Stand der Technik üblichen 4 dBr auf 1 dBr bewirkt werden. Werden mehrere solcher DSLAMs mit Frequenzweiche in Kombination mit jeweils abgestimmter Frequenzselektivität einer Verbrauchereinheit zur Verfügung gestellt, lässt sich der Grad der Frequenzselektivität und der Aufsplitterung bei gesteigerter Gütequalität steigern, wobei störende Dämpfungseffekte weitestgehend minimiert werden können.

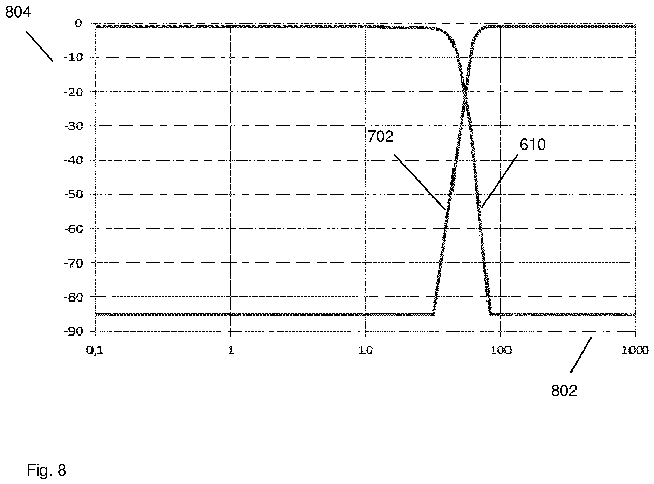

**Figur 8** zeigt die aufeinander abgestimmte charakteristische Dämpfung 804 des Hochpassfilters 702 und des Tiefpassfilters 102 in Abhängigkeit von der Frequenz 802 wie sie beispielsweise in der Frequenzweiche der in Figur 6 beschriebenen modifizierten DVB-C Endnutzer-Schnittstelle 400 oder in dem in Figur 7 beschriebenen Digital Subscriber Line Access Multiplexer technisch realisiert werden könnte. Die Dämpfungswirkung der vorgeschalteten Symmetrierglied-Einrichtung (Balun) 104 ist dabei gegenüber der Dämpfungswirkung des Tiefpassfilters 102 zwar vorhanden, jedoch vernachlässigbar, weshalb sie in der Darstellung der Figur 8 (im Gegensatz zur Darstellung der Figur 3) nicht eigens als separate Kurve dargestellt ist. Durch eine jeweils hohe Flankensteilheit und durch ein nahes Beieinanderliegen der charakteristischen Grenzfrequenzen des Hochpassfilters 702 und des Tiefpassfilters 102 wird der Durchlassbereich für Übertragungsfrequenzen von XDSL-Signalen möglichst klein gehalten. Bei geeigneter Abstimmung der Flankensteilheiten und Grenzfrequenzen von Tief- und Hochpassfilter kann erreicht werden, dass der Schnittpunkt der Flanken von Tief- und Hochpassfilter im niedrigen Dämpfungsbereich von z.B. annähernd 20 dB liegt. D.h., dass alle Übertragungsfrequenzen von XDSL-Signalen innerhalb des Durchlassbereichs möglichst ungedämpft übertragen werden können, was einen hohen Gütefaktor indiziert. Beispielhaft ist es erfindungsgemäß vorgesehen, dass als Filterordnungszahl des Tiefpassfilters 102 beispielsweise die Ordnungszahl 13 und als Filterordnungszahl des Hochpassfilters 702 beispielsweise die Ordnungszahl 7 gewählt bzw. realisiert werden.

**Patentansprüche**

1. Verfahren zur Übertragung digitaler XDSL-Signale über ein Koaxialkabel (302) an eine Schnittstelle (400) eines Endnutzers, wobei das Koaxialkabel (302) einen Gesamtfrequenzbereich aufweist, welcher dazu ausgebildet ist, TV-Signale und/oder Radiosignale in einem oberen Frequenzbereich des Gesamtfrequenzbereichs an die Schnittstelle (400) des Endnutzers zu übertragen, wobei die Schnittstelle (400) einen VDSL-Ausgang (106) umfasst, **dadurch gekennzeichnet, dass** das Verfahren folgende Schritte umfasst:

- ein Zurverfügungstellen von ersten symmetrischen (balanced) XDSL-Signalen an das Koaxialkabel (302) an einem Digital Subscriber Line Access Multiplexer, DSLAM (700);
- ein erstes in Richtung des XDSL-Ausgangs (106) gerichtetes Transformieren der ersten symmetrischen digitalen XDSL-Signale in unsymmetrische, unbalanced, XDSL-Signale mittels einer ersten Symmetrierglied-Einrichtung, Balun-Einrichtung;
- ein Einkoppeln der unsymmetrische XDSL-Signale in das Koaxialkabel (302) in einen unteren Frequenzbereich des Gesamtfrequenzbereichs, wobei der untere Frequenzbereich dem oberen Frequenzbereich überschneidungsfrei unterlagert ist,
- ein Dämpfen einer Reflexion der unsymmetrische XDSL-Signale in dem mindestens einen Koaxialkabel (302) mittels eines Filters (102);
- ein zweites in Richtung des XDSL-Ausgangs (106) gerichtetes Transformieren der unsymmetrischen XDSL-Signale in zweite symmetrische XDSL-Signale mittels einer der Schnittstelle (400) zugeordneten Symmetrierglied- Einrichtung, Balun-Einrichtung (104);
- ein Auskoppeln der zweiten symmetrischen XDSL-Signale;
- ein separates Zurverfügungstellen der zweiten symmetrischen XDSL-Signale an dem XDSL-Ausgang (106).

2. Verfahren nach Anspruch 1, **dadurch gekennzeichnet, dass** für eine Mehrzahl von Koaxialkabeln (302) das erste in Richtung des XDSL-Ausgangs (106) gerichtete Transformieren eine Umwandlung von einer ersten Menge von N symmetrischen, balanced, digitalen XDSL-Signalen mit einer Impedanz in einem ersten Impedanzbereich in eine zweite Menge von N unsymmetrischen, unbalanced, digitalen DSL-Signalen mit einer Impedanz in einem zweiten Impedanzbereich umfasst und die mindestens eine zwischen dem DSLAM (700) und der Schnittstelle (400) lokalisierte Symmetrierglied-Einrichtung eine Multi-Symmetrierglied-Einheit ist.

3. Verfahren nach einem der vorherigen Ansprüche, **dadurch gekennzeichnet, dass** die Schnittstelle (400) eine erweiterte DVB-C, Digital Video Broadcasting - Cable-Schnittstelle ist, wobei die erweiterte DVB-C-Schnittstelle einen TV-Ausgang (306) und/oder einen Radio-Ausgang (308) aufweist, wobei der TV-Ausgang (306) und/oder der Radio-Ausgang (308) dazu ausgebildet sind, die TV- und Radio-Signale im oberen Frequenzbereich zur Verfügung zu stellen, wobei die erweiterte DVB-C-Schnittstelle zusätzlich mindestens den XDSL-Ausgang (106) aufweist, wobei der XDSL-Ausgang (106) dazu ausgebildet ist, die zweiten symmetrischen, balanced, XDSL-Signale im unteren Frequenzbereich zur Verfügung zu stellen.

4. Verfahren nach einem der vorherigen Ansprüche, **dadurch gekennzeichnet, dass** das Einkoppeln der unsymmetrischen XDSL-Signale in das Koaxialkabel (302) mit einer Impedanz im zweiten Impedanzbereich mittels 75 Ohm TV 2-fach-Koppler erfolgt ist.

5. Verfahren nach einem der vorherigen Ansprüche, **dadurch gekennzeichnet, dass** der untere Frequenzbereich DSL-Signale bis annähernd 35 MHz umfasst und/oder der obere Frequenzbereich die TV- und/oder Radio-Signale oberhalb von annähernd 88 MHz umfasst.

6. Verfahren nach einem der vorherigen Ansprüche, **dadurch gekennzeichnet, dass** das zweite in Richtung des XDSL-Ausgangs (106) gerichtete Transformieren eine Umwandlung der unsymmetrischen, unbalanced, digitalen DSL-Signalen mit einer Impedanz im zweiten Impedanzbereich in zweite symmetrische, balanced, XDSL-Signale mit einer Impedanz im ersten Impedanzbereich umfasst, wobei der erste Impedanzbereich in einem Bereich um 100 Ohm oder annähernd 100 Ohm liegt und wobei der zweite Impedanzbereich in einem Bereich um 75 Ohm oder annähernd 75 Ohm liegt.

7. Verfahren nach einem der vorherigen Ansprüche, **dadurch gekennzeichnet, dass** die der Schnittstelle (400) zugeordnete Symmetrierglied-Einheit (104) einen Transformator (110) umfasst, wobei der Transformator (110) dazu ausgebildet, Impedanzen in einem Bereich von annähernd 50 bis annähernd 85 $\Omega$ in eine Impedanz von annähernd 100 Ohm zu transformieren.

8. Verfahren nach einem der vorherigen Ansprüche, **dadurch gekennzeichnet, dass** die der Schnittstelle (400) zugeordneten Symmetrierglied-Einheit (104) ferner eine Gleichtaktdrossel, Common Mode Choke, umfasst, wobei die Gleichtaktdrossel (108) mit dem Transformator (110) mit einer Induktivität von annähernd 70 $\mu$H in Reihe geschaltet ist.

9. Verfahren nach einem der vorherigen Ansprüche, **dadurch gekennzeichnet, dass** der XDSL-Ausgang (106) ein symmetrischer 100 Ohm Ausgang ist und dazu ausgebildet ist, die zweiten symmetrischen XDSL-Signale mit einer Impedanz im ersten Impedanzbereich im unteren Frequenzbereich bis annähernd 35 MHz zur Verfügung zu stellen.

10. Verfahren nach Anspruch 9, **dadurch gekennzeichnet, dass**

-- der XDSL-Ausgang (106) eine Anschlussdämpfung von annähernd 4 dB und/oder eine Reflexionsdämpfung größer oder gleich 30 dB aufweist, oder dass
-- der XDSL-Ausgang (106) eine Anschlussdämpfung von annähernd 1 dB und/oder eine Reflexionsdämpfung größer oder gleich 30 dB aufweist.

11. Verfahren nach Anspruch 10, **dadurch gekennzeichnet, dass**

-- der TV-Ausgang (306) und/oder der Radio-Ausgang (308) eine Anschlussdämpfung von annähernd 12 dB und/oder eine Reflexionsdämpfung größer oder gleich 20 dB aufweist, oder dass
-- der TV-Ausgang (306) und/oder der Radio-Ausgang (308) eine Anschlussdämpfung von annähernd 12 dB bis 14 dB und/oder eine Reflexionsdämpfung größer oder gleich 20 dB aufweist.

12. System zur Übertragung digitaler XDSL-Signale über ein Koaxialkabel (302) an eine Schnittstelle (400) eines Endnutzers, wobei das Koaxialkabel (302) einen Gesamtfrequenzbereich aufweist, welcher dazu ausgebildet ist, TV-Signale und/oder Radiosignale in einem oberen Frequenzbereich des Gesamtfrequenzbereichs an die Schnittstelle (400) des Endnutzers zu übertragen, wobei die Schnittstelle (400) einen XDSL-Ausgang (106) umfasst, **dadurch gekennzeichnet, dass** das System umfasst:

- einen Digital Subscriber Line Access Multiplexer, DSLAM, (700) für ein Zurverfügungstellen von ersten symmetrischen, balanced, XDSL-Signalen an das Koaxialkabel (302);
- mindestens eine zwischen dem DSLAM (700) und der Schnittstelle (400) lokalisierte Symmetrierglied-Einrichtung, Balun-Einrichtung, für ein erstes in Richtung des VDSL-Ausgangs (106) gerichtetes Transformieren der ersten symmetrischen digitalen XDSL-Signale in unsymmetrische, unbalanced, XDSL-Signale;
- Mittel für ein Einkoppeln der unsymmetrische XDSL-Signale in das Koaxialkabel (302) in einen unteren Frequenzbereich des Gesamtfrequenzbereichs, wobei der untere Frequenzbereich dem oberen Frequenzbereich überschneidungsfrei unterlagert ist,
- einen Filter (102) für ein Dämpfen einer Reflexion der unsymmetrische XDSL-Signale in dem Koaxialkabel (302);
- eine der Schnittstelle (400) zugeordnete Symmetrierglied-Einrichtung, Balun-Einrichtung, (104) für ein in Richtung des XDSL-Ausgangs (106) gerichtetes Transformieren der unsymmetrischen XDSL-Signale in zweite symmetrische, balanced, XDSL-Signale;
- Mittel für ein Auskoppeln der zweiten symmetrischen XDSL-Signale;
- den XDSL-Ausgang (106) für ein separates Zurverfügungstellen der zweiten symmetrischen XDSL-Signale.

13. Schnittstelle (400) zur Übertragung digitaler XDSL-Signale über ein Koaxialkabel (302) nach einem Verfahren gemäß den Ansprüchen 1 bis 12, wobei die Schnittstelle (400) eine erweiterte DVB-C-Schnittstelle ist, welche neben einem TV-Ausgang (306) und/der einem Radio-Ausgang (308), welche dazu ausgebildet sind, TV- und Radio-Signale in einem oberen Frequenzbereich zur Verfügung zu stellen, ferner einen XDSL-Ausgang (106) aufweist, **dadurch gekennzeichnet, dass** der zusätzliche XDSL-Ausgang (106) ein symmetrischer Ausgang ist und dazu ausgebildet ist, symmetrische, balanced, XDSL-Signale in einem unteren Frequenzbereich zur Verfügung zu stellen.

14. Schnittstelle (400) nach Anspruch 13, wobei der XDSL-Ausgang (106) statt des symmetrischen Ausgangs ein koaxialer Ausgang ist, wobei der koaxiale Ausgang ferner eine Anschlussdämpfung von annähernd 4 dB und/oder eine Reflexionsdämpfung größer oder gleich 30 dB aufweist, oder wobei der XDSL-Ausgang (106) statt des symmetrischen Ausgangs ein koaxialer Ausgang ist, wobei der koaxiale Ausgang ferner eine Anschlussdämpfung von annähernd 1 dB und/oder eine Reflexionsdämpfung größer oder gleich 30 dB aufweist.

15. Schnittstelle (400) nach Anspruch 14, wobei die Schnittstelle (400) ferner einen Kabeladapter oder ein Adapterkabel aufweist, wobei das Adapterkabel eine der Schnittstelle (400) zugeordnete Symmetrierglied-Einrichtung (104) und einen symmetrischen Kabelabschnitt aufweist.

**Claims**

1. Method for transmitting digital XDSL signals via a coaxial cable (302) to an interface (400) of an end user, the coaxial cable (302) having an overall frequency range designed for transmitting TV signals and/or radio signals to the interface (400) of the end user in an upper frequency range of the overall frequency range, the interface (400) comprising a VDSL output (106), **characterised in that** the method comprises the following steps:

- provision of first symmetrical (balanced) XDSL signals to the coaxial cable (302) on a digital subscriber line access multiplexer, DSLAM, (700);
- a first transformation of the first symmetric digital XDSL signals directed towards the XDSL output (106) into asymmetric (unbalanced) XDSL signals by means of a first balun device;
- coupling of the asymmetric XDSL signals into the coaxial cable (302) in a lower frequency range of the overall frequency range, the lower frequency range being below the upper frequency range without an overlap,
- attenuation of a reflection of the asymmetric XDSL signals in the at least one coaxial cable (302) by means of a filter (102);
- a second transformation of the asymmetric XDSL signals directed towards the XDSL output (106) into second symmetric XDSL signals by means of a balun device (104) assigned to the interface (400);
- coupling-out of the second symmetric XDSL signals;
- separate provision of the second symmetric XDSL signals to the XDSL output (106).

2. Method according to claim 1, **characterised in that** for a plurality of coaxial cables (302) the first transformation, directed towards the XDSL output (106), comprises a conversion from a first set of N symmetric (balanced) digital XDSL signals with an impedance in a first impedance range into a second set of N asymmetric (unbalanced) digital DSL signals with an impedance in a second impedance range, and the at least one balun device located between the DSLAM (700) and the interface (400) is a multi-balun unit.

3. Method according to any one of the preceding claims, **characterised in that** the interface (400) is an expanded DVB-C (Digital Video Broadcasting - Cable) interface, the expanded DVB-C interface having a TV output (306) and/or a radio output (308), the TV output (306) and/or the radio output (308) being designed to provide the TV and radio signals in the upper frequency range, the expanded DVB-C interface additionally having at least the XDSL output (106), the XDSL output (106) being designed to provide the second symmetric (balanced) XDSL signals in the lower frequency range.

4. Method according to any one of the preceding claims, **characterised in that** the asymmetric XDSL signals have been coupled into the coaxial cable (302) with an impedance in the second impedance range by means of a 75-ohm dual TV coupler.

5. Method according to any one of the preceding claims, **characterised in that** the lower frequency range comprises DSL signals up to approximately 35 MHz and/or the upper frequency range comprises the TV and/or radio signals above approximately 88 MHz.

6. Method according to any one of the preceding claims, **characterised in that** the second transformation directed towards the XDSL output (106) comprises a conversion of the asymmetric (unbalanced) digital DSL signals with an impedance in the second impedance range into second symmetric (balanced) XDSL signals with an impedance in the first impedance range, the first impedance range being in a range around 100 ohms or approximately 100 ohms and the second impedance being in a range around 75 ohms or approximately 75 ohms.

7. Method according to any one of the preceding claims, **characterised in that** the balun unit (104) assigned to the interface (400) comprises a transformer (110), the transformer (110) being designed to transform impedances in a region of approximately 50 to approximately 85 ohms into an impedance of approximately 100 ohms.

8. Method according to any one of the preceding claims, **characterised in that** the balun unit (104) assigned to the interface (400) further comprises a common mode choke, the common mode choke (108) being connected in series with the transformer (110) with an inductance of approximately 70 μH.

9. Method according to any one of the preceding claims, **characterised in that** the XDSL output (106) is a symmetric 100-ohm output and is designed to provide the second symmetric XDSL signals with an impedance in the first impedance range in the lower frequency range up to approximately 35 MHz.

10. Method according to claim 9, **characterised in that**

- the XDSL output (106) has a connection loss of approximately 4 dB
- and/or a return loss greater than or equal to 30 dB, or **in that**
- the XDSL output (106) has a connection loss of approximately 1 dB and/or a return loss greater than or equal to 30 dB.

11. Method according to claim 10, **characterised in that**

- the TV output (306) and/or the radio output (308) has a connection loss of approximately 12 dB and/or a return loss greater than or equal to 20 dB, or **in that**
- the TV output (306) and/or the radio output (308) has a connection loss of approximately 12 dB up to 14 dB and/or a return loss greater than or equal to 20 dB.

12. System for transmitting digital XDSL signals via a coaxial cable (302) to an interface (400) of an end user, the coaxial cable (302) having an overall frequency range designed for transmitting TV signals and/or radio signals to the interface (400) of the end user in an upper frequency range of the overall frequency range, the interface (400) comprising an XDSL output (106), **characterised in that** the system comprises:

a digital subscriber line access multiplexer, DSLAM, (700) for providing first symmetric (balanced) XDSL signals to the coaxial cable (302);
at least one balun device, located between the DSLAM (700) and the interface (400), for a first transformation, directed towards the VDSL output (106), of the first symmetric digital XDSL signals into asymmetric (unbalanced) XDSL signals;
means for coupling the asymmetric XDSL signals into the coaxial cable (302) into a lower frequency range of the overall frequency range, the lower frequency range being below the upper frequency range without an overlap,
a filter (102) for attenuating a reflection of the asymmetric XDSL signals in the coaxial cable (302);
a balun device (104) assigned to the interface (400) for a transformation, directed towards the XDSL output (106), of the asymmetric XDSL signals into second symmetric (balanced) XDSL signals;
means for coupling out the second symmetric XDSL signals;
the XDSL output (106) for separately providing the second symmetric XDSL signals.

13. Interface (400) for transmitting digital XDSL signals via a coaxial cable (302) according to a method according to any one of claims 1 to 12, the interface (400) being an expanded DVB-C interface which, in addition to a TV output (306) and/or a radio output (308), which are designed to provide TV and radio signals in an upper frequency range, further has an XDSL output (106), **characterised in that** the additional XDSL output (106) is a symmetric output and is designed to provide symmetric (balanced) XDSL signals in a lower frequency range.

14. Interface (400) according to claim 13, the XDSL output (106) being a coaxial output instead of the symmetric output, in which case the coaxial output further has a connection loss of approximately 4 dB and/or a return loss greater than or equal to 30 dB, or the XDSL output (106) being a coaxial output instead of the symmetric output, in which case the coaxial output further has a connection loss of approximately 1 dB and/or a return loss greater than or equal to 30 dB.

15. Interface (400) according to claim 14, wherein the interface (400) further has a cable adapter or an adapter cable, the adapter cable having a balun device (104), assigned to the interface (400), and a symmetric cable portion.

**Revendications**

1. Procédé de transmission de signaux numériques XDSL par le biais d'un câble coaxial (302) à une interface (400) d'un utilisateur final, dans lequel le câble coaxial (302) comporte une gamme totale de fréquences, laquelle est conçue pour transmettre, dans une gamme de fréquences supérieure de la gamme totale de fréquences, des signaux TV et/ou des signaux radio à l'interface (400) de l'utilisateur, dans lequel l'interface (400) comporte une sortie VDSL (106), **caractérisé en ce que** le procédé comprend les étapes suivantes :

- fourniture de premiers signaux XDSL symétriques (balanced) au câble coaxial (302) dans un multiplexeur d'accès DSL (DSLAM) (700) ;
- première transformation, orientée en direction de la sortie XDSL (106), des premiers signaux numériques XDSL symétriques en signaux XDSL asymétriques (unbalanced), au moyen d'un premier dispositif symétriseur (dispositif balun) ;
- couplage du signal XDSL asymétrique dans le câble coaxial (302) dans une gamme de fréquences inférieure de la gamme totale de fréquences, dans lequel la gamme de fréquences inférieure est subordonnée sans recoupement à la gamme de fréquences supérieure,
- atténuation d'une réflexion des signaux XDSL asymétriques dans l'au moins un câble coaxial (302) au moyen d'un filtre (102) ;
- deuxième transformation, orientée en direction de la sortie XDSL (106), des signaux XDSL asymétriques en deuxièmes signaux XDSL symétriques au moyen d'un dispositif symétriseur (dispositif balun) (104) ordonné à l'interface (400) ;
- découplage des deuxièmes signaux XDSL symétriques ;
- fourniture séparée des deuxièmes signaux XDSL symétriques à la sortie XDSL (106).

2. Procédé selon la revendication 1, **caractérisé en ce**

**que** pour une pluralité de câbles coaxiaux (302), la première transformation orientée en direction de la sortie XDSL (106) comprend une conversion d'une première quantité de N signaux XDSL numériques symétriques (balanced), avec une impédance dans une première gamme d'impédances, en une deuxième quantité de N signaux DSL numériques asymétriques (unbalanced) avec une impédance dans une deuxième gamme d'impédances et l'au moins un dispositif symétriseur localisé entre le DSLAM (700) et l'interface (400) est une unité de multi-symétriseur.

3. Procédé selon l'une des revendications ci-dessus, **caractérisé en ce que** l'interface (400) est une interface DVB-C (Digital Video Broadcasting - Cable) étendue, dans lequel l'interface DVB-C étendue comporte une sortie TV (306) et/ou une sortie radio (308), dans lequel la sortie TV (306) et/ou la sortie radio (308) sont conçues de façon à fournir les signaux TV et radio dans la gamme de fréquences supérieure, dans lequel l'interface DVB-C étendue comporte en outre au moins la sortie XDSL (106), dans lequel la sortie XDSL (106) est conçue de façon à fournir les deuxièmes signaux XDSL symétriques (balanced) dans la gamme de fréquences inférieure.

4. Procédé selon l'une des revendications ci-dessus, **caractérisé en ce que** le couplage des signaux XDSL asymétriques dans le câble coaxial (302) s'effectue avec une impédance dans la deuxième gamme d'impédances au moyen d'un coupleur TV double de 75 ohm.

5. Procédé selon l'une des revendications ci-dessus, **caractérisé en ce que** la gamme de fréquences inférieure comprend les signaux DSL jusqu'à environ 35 Mhz et/ou la gamme de fréquences inférieure comprend les signaux TV et/ou radio au-delà d'environ 88 MHz.

6. Procédé selon l'une des revendications ci-dessus, **caractérisé en ce que** la deuxième transformation orientée en direction de la sortie XDSL (106) comprend une conversion des signaux DSL numériques asymétriques (unbalanced) avec une impédance dans la deuxième gamme d'impédances, en signaux XDSL numériques symétriques (balanced) avec une impédance dans la première gamme d'impédances, dans lequel la première gamme d'impédances est située autour de 100 ohm ou environ 100 ohm et la deuxième gamme d'impédances est située autour de 75 ohm ou environ 75 ohm.

7. Procédé selon l'une des revendications ci-dessus, **caractérisé en ce que** l'unité de symétriseur (104) ordonnée à l'interface (400) comprend un transformateur (110), dans lequel le transformateur (110) est conçu de façon à transformer les impédances dans une gamme d'environ 50 à environ 85 Ω en une impédance d'environ 100 ohm.

8. Procédé selon l'une des revendications ci-dessus, **caractérisé en ce que** l'unité de symétriseur (104) ordonnée à l'interface (400) comprend en outre une bobine d'arrêt de mode commun, ou Common Mode Choke, dans lequel la bobine d'arrêt de mode commun (108) est commutée en série avec le transformateur avec une inductance d'environ 70 μH.

9. Procédé selon l'une des revendications ci-dessus, **caractérisé en ce que** la sortie XDSL (106) est une sortie symétrique 100 ohm et est conçue pour fournir les deuxièmes signaux XDSL symétriques avec une impédance dans la première gamme d'impédances dans la gamme de fréquences inférieure jusqu'à environ 35 MHz.

10. Procédé d'après la revendication 9, **caractérisé en ce que**

    - la sortie XDSL (106) possède une atténuation de connexion d'environ 4 dB et/ou une atténuation de réflexion supérieure ou égale à 30 dB, ou **en ce que**
    - la sortie XDSL (106) possède une atténuation de connexion d'environ 1 dB et/ou une atténuation de réflexion supérieure ou égale à 30 dB.

11. Procédé d'après la revendication 10, **caractérisé en ce que**

    - la sortie TV (308) et/ou la sortie radio (308) possède une atténuation de connexion d'environ 12 dB et/ou une atténuation de réflexion supérieure ou égale à 20 dB, ou **en ce que**
    - la sortie TV (308) et/ou la sortie radio (308) possède une atténuation de connexion d'environ 12 à 14 dB et/ou une atténuation de réflexion supérieure ou égale à 20 dB.

12. Système de transmission de signaux numériques XDSL par le biais d'un câble coaxial (302) à une interface (400) d'un utilisateur final, dans lequel le câble coaxial (302) comporte une gamme totale de fréquences, laquelle est conçue pour transmettre, dans une gamme de fréquences supérieure de la gamme totale de fréquences, des signaux TV et/ou des signaux radio à l'interface (400) de l'utilisateur, dans lequel l'interface (400) comporte une sortie XDSL (106), **caractérisé en ce que** le système comprend :

    - un multiplexeur d'accès DSL ou DSLAM (700) pour la fourniture de de premiers signaux XDSL symétriques (balanced) au câble coaxial (302);

- au moins un dispositif symétriseur (dispositif balun) localisé entre le DSLAM (700) et l'interface (400), pour une première transformation, orientée en direction de la sortie VDSL (106), des premiers signaux numériques XDSL symétriques en signaux XDSL asymétriques (unbalanced) ;

- moyen pour un couplage du signal XDSL asymétrique dans le câble coaxial (302) dans une gamme de fréquences inférieure de la gamme totale de fréquences, dans lequel la gamme de fréquences inférieure est subordonnée sans recoupement à la gamme de fréquences supérieure,

- un filtre (102) pour une atténuation d'une réflexion des signaux XDSL asymétriques dans le câble coaxial (302) ;

- un dispositif symétriseur (dispositif balun) (104) ordonné à l'interface (400), pour une transformation, orientée en direction de la sortie XDSL (106), des signaux XDSL asymétriques (unbalanced) en deuxièmes signaux XDSL symétriques ;

- moyen pour un découplage des deuxièmes signaux XDSL symétriques ;

- la sortie XDSL (106) pour une fourniture séparée des deuxièmes signaux XDSL.

13. Interface (400) destinée à la transmission de signaux XDSL numériques par le biais d'un câble coaxial (302) d'après un procédé selon les revendications 1 à 12, dans laquelle l'interface (400) est une interface DVB-C étendue, laquelle comporte, en plus d'une sortie TV (306) et/ou d'une sortie radio (308), lesquelles sont conçues pour fournir des signaux TV et radio dans une gamme de fréquences supérieure, en outre une sortie XDSL (106), **caractérisée en ce que** la sortie XDSL additionnelle (106) est une sortie symétrique et est conçue pour fournir des signaux XDSL symétriques (balanced) dans une gamme de fréquences inférieure.

14. Interface (400) selon la revendication 13, dans laquelle la sortie XDSL (106) est une sortie coaxiale au lieu d'une sortie symétrique, dans laquelle la sortie coaxiale possède en outre une atténuation de connexion d'environ 4 dB et/ou une atténuation de réflexion supérieure ou égale à 30 dB, ou dans laquelle la sortie XDSL (106) est une sortie coaxiale au lieu d'une sortie symétrique, dans laquelle la sortie coaxiale possède en outre une atténuation de connexion d'environ 1 dB et/ou une atténuation de réflexion supérieure ou égale à 30 dB.

15. Interface (400) selon la revendication 14, dans laquelle l'interface (400) comporte en outre un adaptateur de câble ou un câble adaptateur, dans laquelle le câble adaptateur comporte un dispositif de symétriseur (104) ordonné à l'interface (400) et une section de câble symétrique.

10

12

14

16

18

20

22

24

Fig. 1

Fig. 2

Fig. 3

106

100 Ω

110

104

108

75 Ω

304

302

306

308

106

302

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0143324 A1
- WO 0233968 A1